# EUROPÄISCHE PATENTSCHRIFT

(11) **EP 1 302 473 B1**
(45) Veröffentlichungstag und Bekanntmachung des Hinweises auf die Patenterteilung: **17.01.2007**
(21) Anmeldenummer: 02020843.5
(22) Anmeldetag: 18.09.2002
(51) Int. Cl.: C07F 15/00, C08G 77/398

(54) **Herstellungsverfahren für Platin-Alkenylpolysiloxan-Komplexe, insbesondere Platin-Divinyltetramethyldisoloxan**
Process for the preparation of platinum-alkenylsiloxane complexes, especially platinum-divinyl complexes
Procédé de préparation de complexes platine-alkenylpolysiloxane, en particulier platine-divinyle tétraméthyle disiloxane

(30) Priorität: 16.10.2001 DE 10150489
(43) Veröffentlichungstag der Anmeldung: 16.04.2003
(73) Patentinhaber: W.C. Heraeus GmbH, 63450 Hanau (DE)
(72) Erfinder: Reitz, Ramona, 63599 Biebergemünd (DE); Walter, Richard, Dr., 63755 Alzenau (DE)
(74) Vertreter: Kühn, Hans-Christian

(56) Entgegenhaltungen:
- EP-A- 0 894 804
- EP-A- 0 979 837
- DE-C- 10 035 644
- US-A- 3 715 334

## Beschreibung

Die Erfindung betrifft ein Verfahren zur Herstellung von Platin-Alkenylpolysiloxan-Komplexen.

In EP 0 979 837 A2 wird ein Verfahren zur Herstellung eines Platinhydrosilylierungskatalysators offenbart, bei dem zunächst eine Haloplatinsäure, Alkenylpolysiloxan und Cycloalkylpolysiloxan enthaltende Mischung bei einer bestimmten Temperatur gerührt, anschließend mit ausreichend Lauge im wesentlichen das Halogen entfernt und anschließend die Mischung abfiltriert wird, um den entsprechenden Platinhydrosilylierungskatalysator zu erhalten, wobei darüber hinaus 0,3 bis ungefähr 20 mol Cycloalkylpolysiloxan je mol Alkenylpolysiloxan bereitgestellt werden müssen. Die Reaktionstemperatur beträgt bei diesem Verfahren bei der Herstellung des Platin-Divinylsiloxan-Hydrosilylierungskatalysators (Karstedt-Katalysator) 70°C.

Im Vorliegenden stellt sich die Aufgabe, ein Verfahren bereitzustellen, bei dem die Reaktionstemperatur niedrig gehalten werden kann und unerwünschte Verunreinigungen des Produkts soweit wie möglich vermieden werden.

Diese Aufgabe wird erfindungsgemäß durch ein Verfahren nach Anspruch 1 gelöst.

Beim erfindungsgemäßen Verfahren wird zunächst eine Haloplatinverbindung mit mindestens einem Alkenylpolysiloxan unter Vorlage von Platin in Form eines Platin-Komplexes als Autokatalysator und unter Vorlage mindestens einer Base, insbesondere Hydrogencarbonat, Carbonat oder Hydroxid, bei möglichst niedriger Temperatur in einem von der Haloplatinverbindung oxidierbaren organischen Lösungsmittel/-gemisch umgesetzt.

In der Regel wird der Reaktionsansatz bei der Umsetzung beispielsweise mittels eines Magnetrührers zur besseren Vermischung und Vermeidung von lokalen Überhitzungen gerührt. Die einzelnen Reaktanden werden beispielsweise dem Reaktionsansatz portions- bzw. tropfenweise zugeführt. Das Produkt wird in üblicher Weise, etwa durch Abtrennen der Feststoffteilchen von der flüssigen Phase und anschließendes Einengen der flüssigen Phase gewonnen. Es wird für gewöhnlich nach der Umsetzung filtriert und das Filtrat eingeengt. In der flüssigen Phase ist das Reaktionsprodukt Platin-Alkenylpolysiloxan enthalten.

Mit erfindungswesentlich ist die überraschende Erkenntnis, dass bei Vorlage geringer Mengen von Platin-Alkenylpolysiloxan die Reaktion als solche autokatalysiert wird, so dass die übliche Reaktionstemperatur um bis zu ca. 20 K gesenkt werden kann, was zur Folge hat, dass weniger Zersetzungs- und Nebenprodukte das eigentliche Produkt - auch farblich - weniger verunreinigen. Unerwünschte Ausfällungen von Platin werden reduziert bzw. unterdrückt. Außerdem ergibt sich bei niedrigeren Temperaturen eine Energie- und Kostenersparnis.

Es ist von Vorteil, wenn in Bezug auf das als Haloplatinverbindung eingesetzte Platin mindestens 1 Gewichts-% Platin in Form eines Platin-Komplexes als Autokatalysator eingesetzt wird.

Vorteilhafterweise wird das Alkenylpolysiloxan zum Lösungsmittel/-gemisch und anschließend die Haloplatinverbindung dazugegeben, da bei umgekehrter Zugabe instabile Lösungen entstehen können, die auch Tage nach ihrer Herstellung noch reagieren können.

Bei dem erfindungsgemäßen Verfahren haben sich Divinyltetramethyldisiloxan als Alkenylpolysiloxan und Hexachloroplatinsäure als Haloplatinverbindung in der Praxis bewährt.

Darüber hinaus ist es von Vorteil, wenn der erhaltene Filterkuchen mit dem Lösungsmittel/-gemisch gewaschen und die erhaltene zweite flüssige Phase mit der ersten flüssigen Phase vereint wird, um die Produktausbeute zu erhöhen.

In vorteilhafter Weise hat es sich in der Praxis bewährt, als Lösungsmittel/-gemisch mindestens einen Alkohol, insbesondere Isopropanol und/oder Ethanol, zu verwenden.

Wird die Haloplatinverbindung als wasserfreie Lösung zum Reaktionsansatz, insbesondere als Haloplatinverbindungs-lsopropanollösung, dazugegeben, so findet vorteilhafter Weise eine kontrollierte CO₂-Gasentwicklung statt, die wiederum den Lösungsmittelaustrag durch die Gasentwicklung begrenzt, so dass auch strenge Emissionsgrenzwerte eingehalten werden können.

Die Umsetzungstemperatur liegt zweckmäßig oberhalb der Raumtemperatur und vorteilhaft über 35°C. Besonders bewährt hat sich die Umsetzung mit Divinyltetramethyldisiloxan bei einer Temperatur von T = + 42 °C bis T = + 58 °C, insbesondere von T = + 48 °C bis T = + 52 °C, in der Praxis in vorteilhafter Weise bewährt. Im Falle anderer Siloxane kann die Temperatur bei T = + 42 °C bis T = + 75 °C liegen.

Das mit diesem Verfahren hergestellte Platin-Alkenylpolysiloxan, insbesondere das Platin-Divinyltetramethyldisiloxan, ist im Vergleich mit aus dem Stand der Technik bekannten Verfahren hergestellten Substanzen weniger dunkel gefärbt und neigt nicht zu unerwünschten Ausfällungen.

Mitentscheidend für die positiven Eigenschaften ist die autokatalytische Verwendung des eigentlichen Produkts zur Herstellung desselben, da auf diese Art und Weise die Reaktionstemperatur um bis zu ca. 20 K gesenkt werden konnte, was wiederum zur Folge hat, dass weniger Zersetzungs- und Nebenprodukte entstehen und das Reaktionsprodukt weniger verunreinigt anfällt.

Die Erfindung betrifft auch die Verwendung der nach dem Verfahren erhältlichen Platin-Alkenylpolysiloxane, als Autokatalysatoren im erfindungsgemäßen Verfahren.

Die nachfolgenden Beispiele dienen zur Erläuterung der Erfindung:

### Beispiel 1:

Die Synthese wird unter Inertgas durchgeführt. 42 g Natriumhydrogencarbonat werden in der Apparatur vorgelegt und mit 62 ml Divinyltetramethyldisiloxan, 1 g Pt-Siloxan-Komplex und 150 ml Isopropanol suspendiert. Die Suspension wird unter Rühren auf T = + 48 °C bis + 52 °C erwärmt und bei dieser Temperatur gehalten. Es wird eine Lösung von 10 g Pt als H₂PtCl₆-Feststoff in 25 ml Isopropanol hergestellt. Anschließend läßt man diese Lösung in 5ml-Schritten zur Suspension zulaufen. Nach jeder Zugabe wartet man, bis sich die Suspension wieder entfärbt hat. Die Temperatur wird zwischen T = + 48 °C und + 53 °C gehalten.

Die Reaktion verläuft exotherm, und es ist eine starke Gasentwicklung zu beobachten. Die Suspension läßt man noch mindestens 2 h nachrühren, bis sie sich entfärbt hat. Die entstandene Suspension wird unter Rühren auf Raumtemperatur abgekühlt und anschließend über eine G3-Fritte filtriert und der Filterkuchen mit 75 ml Isopropanol gewaschen. Anschließend wird die Lösung ("Lösung 1") im Rotationsverdampfer bei maximal T = + 45 °C unter Vakuum (bis zu einer Pt-Konzentration von ca. 20 %) eingedampft, bis kein Destillatanfall mehr zu beobachten ist. Dann wird die Lösung über einen Blaubandfilter filtriert. Der Filterkuchen wird mit 200 ml Isopropanol gewaschen und beim nächsten Versuch zu "Lösung 1" gegeben.

### Beispiel 2:

### Die Synthese wird unter Inertgas durchgeführt.

42 g Natriumhydrogencarbonat wird in der Apparatur vorgelegt und mit 69 g Trivinylpentamethyltrisiloxan, 2 g Pt-Siloxan-Komplex und 70 ml Ethanol suspendiert. Man stellt eine Lösung von 10 g Pt als H₂PtCl₆-Feststoff in 25 ml Ethanol her. Die weitere Vorgehensweise ist analog zu der in Beispiel 1 genannten, jedoch liegt die Reaktionstemperatur bei T = + 70 °C bis T = + 75 ° C, während zum Waschen des Filterkuchens Ethanol eingesetzt wird.

### Beispiel 3:

### Die Synthese wird unter Inertgas durchgeführt.

35 g Natriumhydrogencarbonat wird in der Apparatur vorgelegt und mit 60 g Divinylhexamethyltrisiloxan, 2 g Pt-Siloxan-Komplex und 50 ml Ethanol suspendiert. Man stellt eine Lösung von 10 g Pt als H₂PtCl₆-Feststoff in 25 ml Ethanol her.

Die weitere Vorgehensweise ist analog zu der in Beispiel 1 genannten, jedoch liegt die Reaktionstemperatur bei T = + 70 °C bis + 75 °C, während zum Waschen des Filterkuchens Ethanol eingesetzt wird.

### Beispiel 4:

### Die Synthese wird unter Inertgas durchgeführt.

37 g Natriumhydrogencarbonat wird in der Apparatur vorgelegt und mit 77 g Divinyldiphenyldimethyldisiloxan, 2 g Pt-Siloxan-Komplex und 50 ml Ethanol suspendiert. Man stellt eine Lösung von 10 g Pt als H₂PtCl₆-Feststoff in 25 ml Ethanol her. Die weitere Vorgehensweise ist analog zu der in Beispiel 1 genannten, jedoch liegt die Reaktionstemperatur bei T = + 70 °C bis + 75 °C, während zum Waschen des Filterkuchens Ethanol eingesetzt wird.

## Patentansprüche

1. Herstellungsverfahren für Platin-Alkenylpolysiloxan-Komplexe, bestehend aus der Umsetzung einer Haloplatinverbindung mit mindestens einem Alkenylpolysiloxan unter Vorlage von Platin in Form eines Platin-Komplexes als Autokatalysator und unter Vorlage mindestens einer Base in einem von der Haloplatinverbindung oxidierbaren organischen Lösungsmittel/-gemisch.

2. Verfahren nach Anspruch 1, **dadurch gekennzeichnet, dass** in Bezug auf das als Haloplatinverbindung eingesetzte Platin mindestens 1 Gewichts-% Platin in Form eines Platin-Komplexes als Autokatalysator eingesetzt wird.

3. Verfahren nach einem der Ansprüche 1 und 2, **dadurch gekennzeichnet, dass** zunächst das Alkenylpolysiloxan zum Lösungsmittel/-gemisch und anschließend die Haloplatinverbindung dazugegeben wird.

4. Verfahren nach einem der Ansprüche 1 bis 3, **dadurch gekennzeichnet, dass** es sich bei der Haloplatinverbindung um Hexachloroplatinsäure handelt.

5. Verfahren nach einem der Ansprüche 1 bis 4, **dadurch gekennzeichnet, dass** als Lösungsmittel/-gemisch mindestens ein Alkohol verwendet wird.

6. Verfahren nach Anspruch 5, **dadurch gekennzeichnet, dass** als Alkohol Isopropanol und/oder Ethanol verwendet wird.

7. Verfahren nach einem der Ansprüche 1 bis 6, **dadurch gekennzeichnet, dass** die Haloplatinverbindung als wasserfreie Lösung zum Reaktionsansatz zugegeben wird.

8. Verfahren nach Anspruch 7, **dadurch gekennzeichnet, dass** eine Lösung der Haloplatinverbindung in Isopropanol verwendet wird.

9. Verfahren nach einem der Ansprüche 1 bis 8, **dadurch gezeichnet**, dass die Umsetzung bei einer Temperatur von T = + 42 °C bis T = + 75 °C durchgeführt wird.

10. Verfahren nach einem der Ansprüche 1 bis 9, **dadurch gekennzeichnet, dass** als Base Natriumhydrogencarbonat verwendet wird.

11. Verfahren nach einem der Ansprüche 1 bis 10, **dadurch gekennzeichnet, dass** das Produkt durch Abtrennen der Feststoffteilchen von der flüssigen Phase und anschließendes Einengen der flüssigen Phase gewonnen wird.

12. Verfahren nach einem der Ansprüche 1 bis 11, **dadurch gekennzeichnet, dass** es sich bei dem Alkenylpolysiloxan um Divinyltetramethyldisiloxan handelt.

13. Verfahren nach Anspruch 12, **dadurch gekennzeichnet, dass** die Umsetzung bei einer Temperatur von T = + 48 °C bis T = + 52 °C durchgeführt wird.

14. Verwendung von Platin-Alkenylpolysiloxan als Autokatalysator bei der Herstellung von Platin-Alkenylpolysiloxan.

## Claims

1. Preparation process for platinum-alkenylpolysiloxane complexes, consisting of reaction of a haloplatinum compound with at least one alkenylpolysiloxane by initially taking platinum in the form of a platinum complex as an autocatalyst and initially taking at least one base in an organic solvent (mixture) oxidizable by the haloplatinum compound.

2. Process according to Claim 1, **characterized in that**, based on the platinum used as the haloplatinum compound, at least 1% by weight of platinum in the form of a platinum complex is used as the autocatalyst.

3. Process according to either of Claims 1 and 2, **characterized in that** first the alkenylpolysiloxane is added to the solvent (mixture) and then the haloplatinum compound is added thereto.

4. Process according to any of Claims 1 to 3, **characterized in that** the haloplatinum compound is hexachloroplatinic acid.

5. Process according to any of Claims 1 to 4, **characterized in that** at least one alcohol is used as the solvent (mixture).

6. Process according to Claim 5, **characterized in that** isopropanol and/or ethanol is used as the alcohol.

7. Process according to any of Claims 1 to 6, **characterized in that** the haloplatinum compound is added as an anhydrous solution to the reaction batch.

8. Process according to Claim 7, **characterized in that** a solution of the haloplatinum compound in isopropanol is used.

9. Process according to any of Claims 1 to 8, **characterized in that** the reaction is carried out at a temperature of T = + 42°C to T = + 75°C.

10. Process according to any of Claims 1 to 9, **characterized in that** sodium bicarbonate is used as the base.

11. Process according to any of Claims 1 to 10, **characterized in that** the product is obtained by separating the solid particles from the liquid phase and then evaporating the liquid phase.

12. Process according to any of Claims 1 to 11, **characterized in that** the alkenylpolysiloxane is divinyltetramethyldisiloxane.

13. Process according to Claim 12, **characterized in that** the reaction is carried out at a temperature of T = + 48°C to T = + 52°C.

14. Use of platinum-alkenylpolysiloxane as an autocatalyst in the preparation of platinum-alkenylpolysiloxane.

## Revendications

1. Procédé de production de complexes de platine et d'alcénylpolysiloxane, consistant à faire réagir un composé de haloplatine avec au moins un alcénylpolysiloxane en introduisant le platine sous la forme d'un complexe de platine servant d'autocatalyseur et en introduisant au moins une base dans un solvant ou mélange de solvants organiques oxydables par le composé de haloplatine.

2. Procédé selon la revendication 1, **caractérisé en ce que**, ramené au platine utilisé sous la forme d'un composé de haloplatine, on utilise au moins 1% en poids de platine sous la forme d'un complexe de platine servant d'autocatalyseur.

3. Procédé selon l'une des revendications 1 et 2, **caractérisé en ce que** l'alcénylpolysiloxane est ajouté en premier au solvant ou mélange de solvants, suivi du composé de haloplatine.

4. Procédé selon l'une des revendications 1 à 3, **caractérisé en ce que** le composé de haloplatine est l'acide hexachloroplatinique.

5. Procédé selon l'une des revendications 1 à 4, **caractérisé en ce que** l'on utilise au moins un alcool en tant que solvant ou mélange de solvants.

6. Procédé selon la revendication 5, **caractérisé en ce que** l'alcool utilisé est l'isopropanol et/ou l'éthanol.

7. Procédé selon l'une des revendications 1 à 6, **caractérisé en ce que** le composé de haloplatine est ajouté au mélange réactionnel sous la forme d'une solution anhydre.

8. Procédé selon la revendication 7, **caractérisé en ce que** l'on utilise une solution du composé de haloplatine dans de l'isopropanol.

9. Procédé selon l'une des revendications 1 à 8, **caractérisé en ce que** la réaction se fait à une température T allant de +42°C à +75°C.

10. Procédé selon l'une des revendications 1 à 9, **caractérisé en ce que** la base utilisée est l'hydrogénocarbonate de sodium.

11. Procédé selon l'une des revendications 1 à 10, **caractérisé en ce que** le produit est obtenu par séparation des particules solides d'avec la phase liquide, suivie de la concentration de la phase liquide.

12. Procédé selon l'une des revendications 1 à 11, **caractérisé en ce que** l'alcénylpolysiloxane est le divinyltétraméthyldisiloxane.

13. Procédé selon la revendication 12, **caractérisé en ce que** la réaction se fait à une température T allant de +48°C à +52°C.

14. Utilisation de platine-alcénylpolysiloxane comme autocatalyseur dans la production de complexes de platine et d'alcénylpolysiloxane.
